Europäisches Patentamt

European Patent Office

Office européen des brevets

(11) Publication number: **0 406 152 A1**

# EUROPEAN PATENT APPLICATION

(21) Application number: 90610043.3

(51) Int. Cl.5: **B23Q 1/16, B23Q 1/28**

(22) Date of filing: 28.06.90

(30) Priority: 28.06.89 DK 3232/89

(43) Date of publication of application:
02.01.91 Bulletin 91/01

(84) Designated Contracting States:
AT BE CH DE DK ES FR GB GR IT LI NL SE

(71) Applicant: Nykjaer, Henrik
Groftager 99
DK-5750 Ringe(DK)

(72) Inventor: Nykjaer, Niels Preben Girich
Sögärdsvej 23
DK-5750 Ringe(DK)

(74) Representative: Larsen, Hans Ole et al
Larsen & Birkeholm ApS Europaeisk
Patentbureau P.O. Box 200200
DK-2630 Taastrup(DK)

(54) Clamping device.

(57) On known clamping devices, the T-groove is produced either by milling in solid material, which is a slow and troublesome process, or it is formed as a slot, the top of which is closed by a ring, which demands clearance for the bolt head in order for the T-bolt to be inserted.

In order to avoid these disadvantages, the clamping device according to the invention is built up of two cooperating units or parts (16, 18) which are configured in such a manner that the outer part (18) can slide on the outside of the inner part (16), and with a T-groove (11, 14) formed as a channel between these two sliding surfaces which surrounds the whole of the bolt head (6).

The parts in the clamping device can thus be produced by turning in a lathe, which cheapens the manufacture, and with a considerably higher precision due to the concentric configuration of the parts.

Fig. 1

EP 0 406 152 A1

## CLAMPING DEVICE

The invention relates to a clamping device for mounting on a bedplate and with possibility of clamping of an item so that the item can be adjusted in relation to the bedplate by means of one or more securing bolts, the heads of which extend in a T-groove in the clamping device.

Clamping devices af this kind are used particularly in connection with machining operations for the mounting of items or machining tools such as drilling aggregates and the like.

The possibility is hereby provided for adjustability, in that the item or the tool can be turned or moved in the T-groove, and can thereafter be secured in the desired position.

Hitherto known clamping devices with T-grooves are produced by milling the grooves in the device. This places great demands on the accuracy of the machining, especially when a pivotable plane is involved where the groove must be centred accurately around the plane's axis of rotation.

This considerably increases the costs of production, in that the milling work has to be carried out with a profile cutter which works slowly and demands a precise milling machine. Furthermore, a T-groove milled in this way gives rise to demands concerning an access opening from outside and into the groove for the head of the bolt in order for this to be positioned in the groove. The control in those positions where the bolt is disposed opposite the access opening is hereby weakened, and therefore the clamping possibilities are correspondingly limited.

From the description for FR-PS 1,247,633 there is known a clamping device for use in a lathe for the eccentric mounting of a clamping chuck. This auxiliary tool is provided with a T-groove configured as a recess in an underpart in which a bolt head can be inserted, after which a disk can be screwed over the bolt head for closing the groove over the bolt head.

However, this known construction is without particular control of the sliding parts during the adjustment, especially since the groove must have a breadth which is broader than the bolt head corresponding to the distance from the bolt and to the side edge of the head, hereby enabling the bolt to be inserted in the groove. Furthermore, there is no possibility of adjusting this device in relation to the base part, the reason being that the screws through the disk are screwed directly into the underpart. Therefore, with this clamping device, the setting of the upper part can be effected only by loosening the bolts in the T-groove, after which the upper part can be turned in relation to the underpart.

It is the object of the invention to overcome the disadvantages and drawbacks of the known clamping devices, and this is achieved with a clamping device which comprises both an inner part having an external side surface which comprises the inner side surface of the T-groove, and also an outer part, the internal side surface of which constitutes the outer side surface and underside of the T-groove, said outer part being secured to the bedplate by means of screws.

The manufacturing work is thus considerably reduced, in that the two parts can be produced separately and without the need for milling work, i.e. the work can be carried out on a lathe. This affords great accuracy, in that it is now only necessary to turn a part of the T-groove in each part.

Moreover, there is no need for a special access opening or clearance for the head of the bolt, in that the bolt can be inserted in the groove before the parts are assembled, and it is ensured that the bolt lies closely up against the sides of the groove. The T-groove hereby becomes unbroken, and the clamping can be effected anywhere along the groove's length without any risk of the bolt slipping during the clamping with the danger of stagger. Moreover, a simple mounting on the bedplate is ensured by means of a number of screws through the inner part and down into the bedplate. Consequently, the only demand placed on the bedplate is that it forms a plane surface for the outer part and that it is provided with threaded holes corresponding to the screws. The clamping device is thus able to be used for mounting on any surface where there is need for an adjustable clamping of an item.

As disclosed in claim 2, by configuring a recess in the parts, the parts will be able to be assembled together at the same time that they are secured to the bedplate in one and the same sequence of operations.

As disclosed in claim 3, by giving the head of the bolt an outer form corresponding to a segment of the T-groove, the greatest possible abutting surface and control surface will be achieved between the movable parts.

As disclosed in claim 4, by allowing the top side of the parts to form a plane, this can be made completely parallel with the bedplate during manufacture in a lathe, whereby the greatest possible accuracy is ensured.

Finally, as disclosed in claim 5, it is expedient to allow the outer part to form an inclined clamping plane in relation to the bedplate, in that an angular adjustability is hereby achieved.

The invention will now be described in closer detail with reference to the drawing, where

fig. 1 shows a partly cross-sectional view of a plane clamping device seen from the side,

fig. 2 shows the device seen in section in the direction II-II in fig. 1,

fig. 3 shows an example of an angular device seen from the front,

fig. 4 shows this angular device seen from the side,

fig. 5 shows this angular device seen in section,

fig. 6 shows an example of a plane clamping device on a slide seen from above, and

fig. 7 shows this clamping device seen from the side.

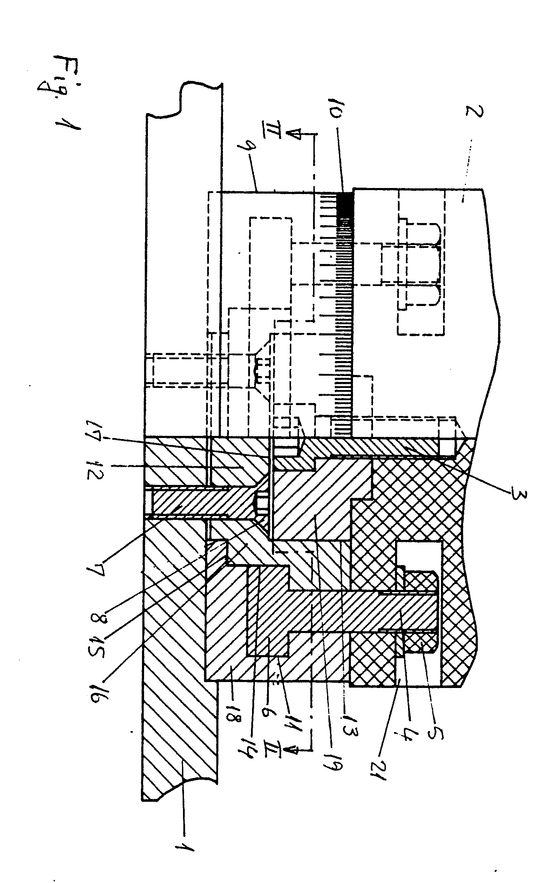

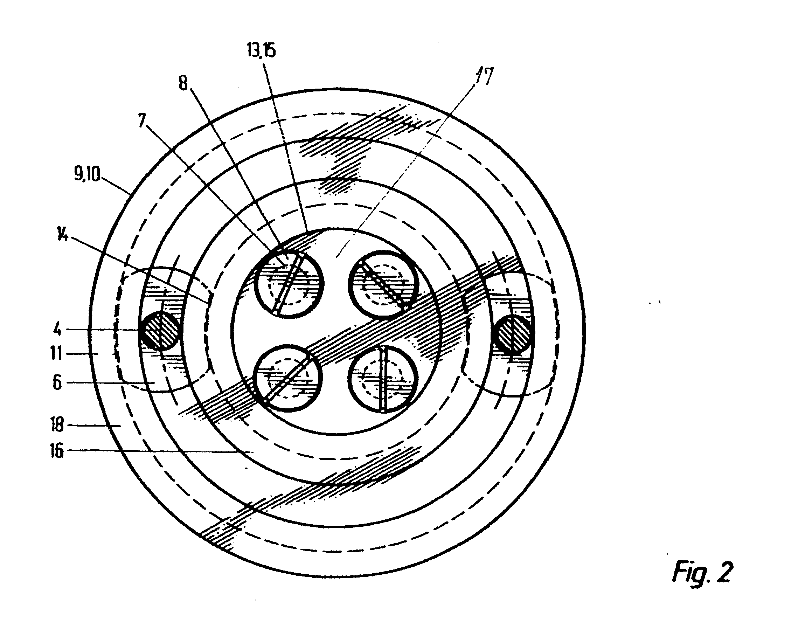

In fig. 1 and 2 is shown an example of an embodiment of a plane clamping device.

The device is secured to a base or bedplate 1, which can be a machine part or bedplate on a machine tool, and which is provided with threaded holes for the securing bolts 7. As shown, a recess can be turned in the bedplate 1 for controlling of the device when tightening with the bolts 7.

The actual clamping device comprises two concentric rotary elements or parts, namely an inner part 12, 16 and an outer part 18. These parts lie up against each other along the side surface, which forms an upper recess 15 which extends over into a groove 11, 14 for the bolt head 6 and having an overlying channel for the threaded portion 4 of the bolt, see especially fig. 2.

By loosening the nuts 5 on the bolts 4, 6, the two parts will thus be able to be turned in relation to each other and hereby set in any desired angular position, after which the bolts 5 can be tightened again.

The inner part 12, 16 is further provided with holes for screws 7, 8 which are screwed in from above through the underside 17 in the recess 13 and screwed into the threaded holes in the bedplate 1.

On the outer side 9 of the outer part, a scale 10 can be provided. By loosening the screws 7, the postion of the item can thus be set in relation to the bedplate 1, after which the screws 7 are tightened.

A tool 2 or other item which is to be clamped is provided with a centre trunnion 19 which is secured to the tool 2 by means of a bolt 3. This trunnion 19 passes down in the recess 13 in the inner part 12, 16, so that the tool can be controlled while being turned to the setting. Moreover, there are bores for the bolts 4 and recesses 21 in the side of the tool 2, and thus by loosening the nuts 5 the tool 2 can be turned and set in a given position, in that the heads 6 of the bolts slide in the groove 11, 14, after which the nuts 5 can be tightened again and the tool remains secured in the desired position.

As will appear from the drawings, the outer part 18 has a plane top and bottom surface, and thus the clamping device has mounting surfaces which extend in a totally parallel manner.

As will also appear from the drawing, the parts are rotatory elements which are produced solely by turning in a lathe. This ensures a quick and precise production with completely concentrically extending T-grooves and slide surfaces for the rotation.

In order to ensure the best possible control of the T-bolt, as will be seen from fig. 2 the bolt head 6 is formed with curved sides for abutment against the internal sides 11, 14 of the T-groove.

When being assembled, the two parts are placed together with the desired number of T-bolts in the groove, after which the inner part is secured to the bedplate 1 by means of screws 7, 8, whereby the two parts will be clamped together at the recess 15 and at the same time be secured with one and the same tightening operation, in that the height of the inner part 12 is slightly less than the height of the outer part 18. The T-bolts are then inserted through the holes in the item 2 and provided with the nuts 5.

When the item has been set in the desired position, the nuts 5 are tightened so that the item on the clamping device is secured to the bedplate 1. By loosening the nuts 5, a new positioning can take place and the clamping device and the item are again secured by tightening the nuts.

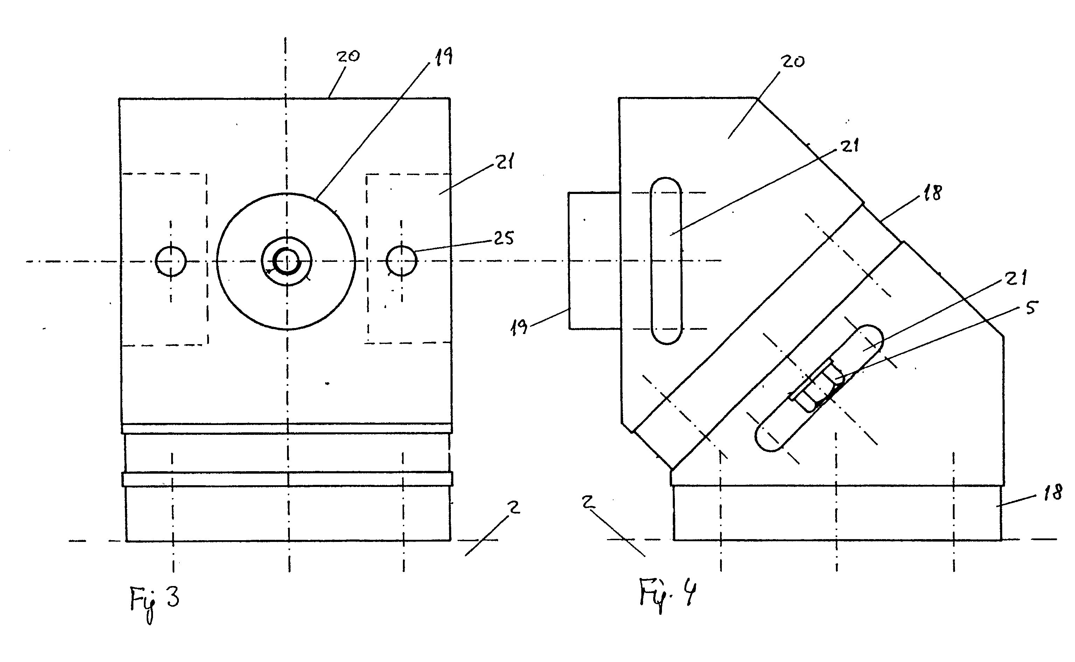

In figs. 3-5 is shown an example of an embodiment of an angular clamping device.

In this embodiment, the inner part 12, 16 in principle corresponds completely to that shown in figs. 1 and 2, with the exception that in this case there is no recess provided at the top. The part is secured by means of screws 7 in the outer part 18, which is provided with an upper part 20, and which ends in an angularly extending plane.

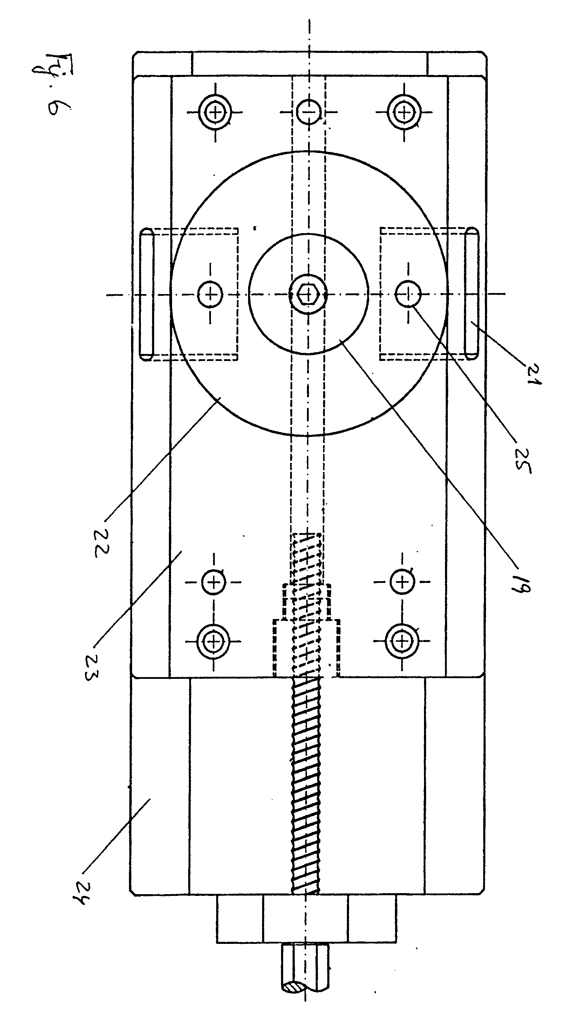

In the middle of the plane of the upper part 20 there is secured a centre trunnion 19 which fits into the recess 13, 17 in the inner part 12, as shown in fig. 5.

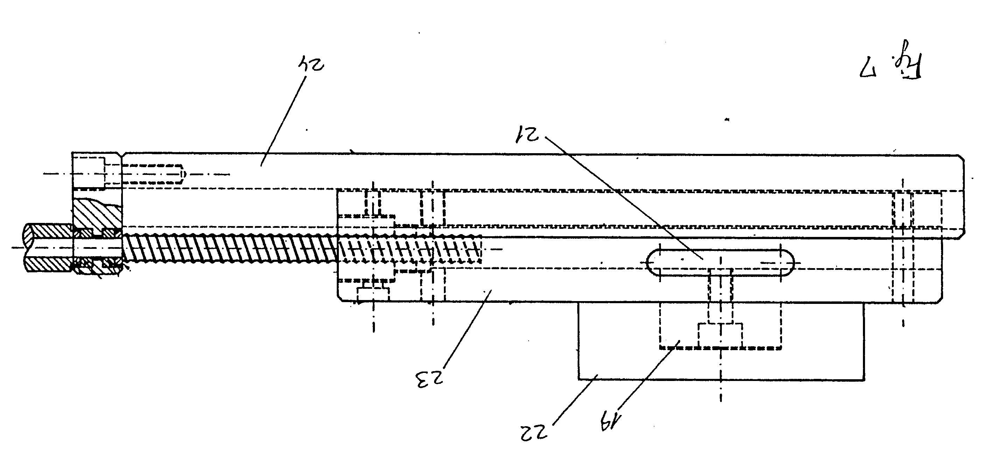

There are also two holes 25 for the T-bolts through the plane and a transverse recess 21, see figs. 3 and 4, so that the nut 5, see fig. 4, can be tightened and loosened from the outside.

The advantages and the mode of operation correspond completely to the clamping device shown in figs. 1 and 2. However, the setting possibilities have been extended, in that angular settings can be made between these two positions, as shown in figs. 4 and 5. Moreover, supplementation with further modules can be effected, in that as shown additional centre trunnions 19 can be mounted to receive further angular modules.

The centre trunnion 19 ensures precise positioning, in that the parts will be centred in relation to the trunnion during the setting.

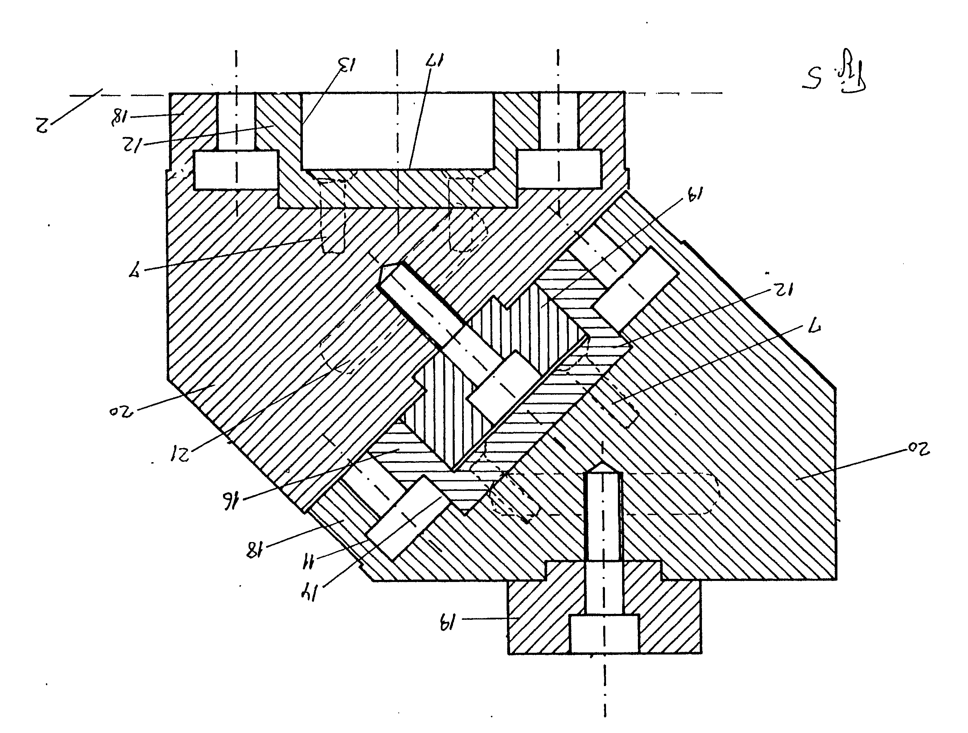

Finally, figs. 6 and 7 show an example of the use of a clamping device 22 secured on a slide 23, 24. The top of the slide 23 is provided with a centre trunnion 19, holes 25 for the T-bolts and slots 21 for access to the nut and thereby the locking together of the clamping device 22 and the slide 23.

As will appear from the above, the parts can be used in a module system for the configuration of any desired degree of setting of clamping devices. The accuracy is great for reasons of the consistent use of rotatory elements, all of which can be produced on a lathe. This ensures the great accuracy, in that all of the parts are produced with a common axis of rotation and, since the costs of manufacture are hereby also reduced, the clamping device according to the invention will be cheaper and more precise than the known clamping devices with milled T-grooves and massive parts.

## Claims

1. Clamping device for mounting on a bedplate and with the possibility of the securing of an item in such a manner that the item can be set in relation to the bedplate by means of one or more securing bolts, where the heads of said bolts run in a T-groove in the clamping device, **characterized** in that the clamping device comprises both an inner part (12, 16), the external side surface (14) of which constitutes the inner side surface of the T-groove, and also an outer part (18), the internal side surface (11) of which constitutes the outer side surface and underside of the T-groove, said outer part (12, 16) being secured to the bedplate (1) by means of screws (7, 8).

2. Clamping device according to claim 1, **characterized** in that the inner part (12, 16) on the underside forms a recess (15) which lies up against an annular surface on the outer part (18) so that tightening of the screws (7, 8) simultaneously secures the two parts (12, 16 and 18) to the bedplate (1).

3. Clamping device according to claims 1 and 2, **characterized** in that the bolt head (6) is configured as a part of a circular arc for sliding abutment against the side surfaces (11, 14) of the T-groove.

4. Clamping device according to claims 1 - 3, **characterized** in that the inner part (16, 12) and the outer part (18, 20, 22) form a plane support for the item (2), said plane being parallel with the bedplate (1, 23).

5. Clamping device according to claims 1 - 3, **characterized** in that outer part (18, 20) forms a plane which extends in an inclined manner in relation to the bedplate (1).

Fig. 1

Fig. 2

EP 0 406 152 A1

Fig. 4

Fig. 3

Fig. 7

Fig. 6

Fig. 5

European Patent
Office

# EUROPEAN SEARCH REPORT

Application Number

EP 90 61 0043

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 241 450 (MORRIS) <br> * Column 3, lines 17-71; figures 4,5,7 * | 1 | B 23 Q 1/16 <br> B 23 Q 1/28 |
| A | | 3,4 | |
| A | DE-C- 634 705 (HOPPE) <br> * Claim 4 * | 3 | |
| A | US-A-2 578 476 (HOLLINGER) | | |
| A | US-A-1 503 995 (PERKINS) | | |
| A | US-A-1 596 702 (WILLIAMS) | | |
| A | DE-C- 401 375 (RUEGER) | | |
| A | FR-A-2 107 710 (WALDRICH) | | |
| A | DE-A-3 232 496 (GRESSEL) | | |
| A | FR-A- 333 122 (BERLINER) | | TECHNICAL FIELDS SEARCHED (Int. Cl.5) |
| A | GB-A- 544 395 (CHURCHILL) | | B 23 Q |
| A | GB-A- 439 184 (ASQUITH) | | |

The present search report has been drawn up for all claims

| Place of search | Date of completion of the search | Examiner |
|---|---|---|
| THE HAGUE | 02-10-1990 | DE GUSSEM J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)